(19) Europäisches Patentamt
European Patent Office
Office européen des brevets

(11) Numéro de publication: **0 102 294**
**B1**

(12) # FASCICULE DE BREVET EUROPEEN

(45) Date de publication du fascicule du brevet: **27.08.86**

(51) Int. Cl.⁴: **C 08 K 5/53**, C 09 K 21/12

(21) Numéro de dépôt: **83401680.0**

(22) Date de dépôt: **19.08.83**

(54) **Mélanges ignifugeants contenant du phosphore pour matériaux de synthèse.**

(30) Priorité: **24.08.82 FR 8214518**

(43) Date de publication de la demande: **07.03.84 Bulletin 84/10**

(45) Mention de la délivrance du brevet: **27.08.86 Bulletin 86/35**

(84) Etats contractants désignés: **CH DE FR GB LI NL**

(56) Documents cités:
**FR - A - 2 276 345**
**NL - A - 278 214**
**US - A - 4 144 387**

(73) Titulaire: **ATOCHEM, 4 & 8, Cours Michelet La Défense 10, F-92800 Puteaux (FR)**

(72) Inventeur: **Bernard, Michel Paul Charles, 107, rue Danton, F-92300 Levallois (FR)**
Inventeur: **Balde, Daniel, 13, rue Charles Friedel, F-75020 Paris (FR)**
Inventeur: **Ghenassia, Elie François Marius, 30, route de Lapugnoy, F-62920 Chocques (FR)**
Inventeur: **Laumain, François Bernard, 123, rue Anatole France, F-92300 Levallois (FR)**

**EP 0 102 294 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne des agents ignifugeants contenant du phosphore et des matériaux de synthèse contenant ces agents.

Des mélanges ignifugeants phosphorés efficaces pour l'ignifugation des polymères, notamment des mousses de polyuréthanne souples ou rigides ont été décrits dans le brevet US-A-4 144 387.

Les mélanges décrits dans ce brevet sont constitués de chloro-2 éthyle phosphonate de bis-(chloro-2 éthyle).

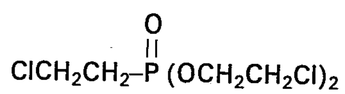

et de polyphosphonates à points d'ébullition élevés, comprenant, entre autre, un composé dimère de structure présumée:

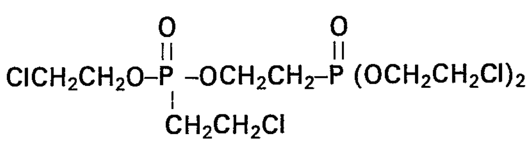

On obtient avec ces mélanges de bons résultats pour les essais de vieillissement thermique accéléré.

Cependant les mélanges décrits dans ce brevet présentent l'inconvénient de cristalliser facilement à la température ambiante. Ainsi, un produit du commerce répondant à cette invention, connu sous le nom de «ANTIBLAZE 78» de MOBIL OIL Corp., constitué de environ 65% en poids de chloroéthyle phosphonate de bis (chloroéthyle) et de environ 35% de polyphosphonates à hauts points d'ébullition accessible directement par isomérisation thermique du phosphite de tris (chloro-2 éthyle) comme indiqué dans le brevet US-A-4 144 387) et contenant 12% en poids de phosphore, présente un point de cristallisation de 23 °C. Des mélanges répondant également à l'invention précédente, préparés au Laboratoire ou à l'échelle pilote, par isomérisation directe du phosphite de tris (chloro-2 éthyle) dans des conditions opératoires variées de température et de volume réactionnel, et contenant des taux de chloro-éthyle phosphonate de bis (chloroéthyle) compris entre 60 et 85% présentent également des point de cristallisation compris entre 20 et 30 °C. Les bis(bromoalkyl) bromoalkyl-phosphonates dont l'emploi comme ignifugeants fait l'objet du brevet NL-A-278214, présentent eux aussi des points de cristallisation élevés; ainsi, d'après Beilstein E III 4, 1781, le bis(bromo-2 éthyl) bromo-2 éthylphosphonate a un point de fusion de 48–49 °C. Le fait de cristalliser facilement à la température ambiante constitue un inconvénient majeur pour l'emploi industriel de ces ignifugeants, du fait des risques de solidification au cours de leur stockage ou de leur mise en œuvre (prise en masse dans les pompes et les tuyauteries).

L'objet de l'invention est de fournir de nouveaux mélanges ignifugeants contenant du phosphore, apportant une amélioration du comportement au feu élevée et durable et présentant un point de cristallisation peu élevé. L'invention a également pour objet des compositions de matériaux de synthèse à comportement au feu amélioré, en particulier des matériaux à base de polyuréthannes, contenant les nouveaux mélanges ignifugeants.

Il a été découvert contre toute attente que des mélanges constitués principalement de plusieurs phosphonates de structure:

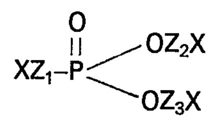

dans lesquels: X = chlore ou brome

$Z_1, Z_2, Z_3 = -CH_2-CH_2-$

ou $-CH_2-$C H–
|
R

avec R = $CH_3$ ou $CH_2Cl$

et tels que le pourcentage global (en moles) de groupements – ZiX de type haloéthyle ($-CH_2-CH_2-X$) soit compris entre 2 et 90%, ne cristallisent pas à la température ambiante et présentent des points de cristallisation peu élevés ($\leqslant$ 13 °C).

Les mélanges selon l'invention présentent une grande efficacité ignifugeante, supérieure dans le temps à celle des produits de l'art antérieur comme il apparaît après des essais de vieillissement accéléré.

Ces résultats sont inattendus car les mélanges de l'invention sont constitués d'éléments de masses moléculaires plus élevés que les mélanges de l'art antérieur (remplacement de groupements haloéthyles par des groupements halopropyles) et présentant néanmoins des points de cristallisation nettement moins élevés.

De même, malgré des teneurs globales en phosphore plus basses dans les mélanges de l'invention par rapport à l'art antérieur, l'efficacité ignifugeante observée est au moins égale et même supérieure après essais de vieillissement accéléré.

Les mélanges de phosphonates de l'invention peuvent par exemple être obtenus facilement et directement par isomérisation de mélanges des phosphites correspondant, de structure:

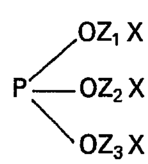

avec X, $Z_1$, $Z_2$, et $Z_3$ définis comme précédemment.

Cette isomérisation peut être thermique (transposition d'ARBUZOV), dans ce cas la réaction

s'effectue généralement à des températures de l'ordre de 150 à 200 °C. On peut procéder en chargeant ce mélange de phosphites dans un réacteur et en chauffant progressivement le milieu jusqu'à la température de réaction (procédé dit «en masse»). Ce procédé est applicable à l'échelle du laboratoire, cependant, la transposition d'ARBUZOV s'accompagne d'une exothermie importante qui nécessite un contrôle précis de la température de réaction afin d'éviter un emballement.

C'est pourquoi il est préférable d'utiliser un procédé dit «en pied de cuve», dans lequel on introduit progressivement le mélange de phosphites dans un réacteur contenant déjà un certain volume de mélange de phosphonates, porté à la température de réaction.

La préparation du mélange de phosphonates est terminée par un étêtage sous pression réduite, destiné à chasser les produits volatils généralement formés (alkanes halogénés).

L'examen analytique des mélanges de phosphonates de l'invention, par RMN (Résonnance magnétique nucléaire) du proton et du 13C permet de déterminer le pourcentage global (en moles) de groupements –ZiX de type haloéthyle ($-CH_2-CH_2-X$) par rapport à l'ensemble des groupements haloéthyles et halopropyles présents.

Les mélanges de phosphites utilisables dans la transposition d'ARBUZOV peuvent être-facilement obtenus par des réactions chimiques connues.

Il est possible, par example, de condenser un trihalogénure de phosphore $PX_3$ avec deux ou plusieurs oxydes d'alkylène tels que l'oxyde d'éthylène, l'oxyde de propylène ou l'épichlorhydrine en proportions appropriées.

Les mélanges de phosphonates de l'invention peuvent également être obtenus par isomérisation thermique d'un mélange de deux ou plusieurs phosphites tel que:

$$P\,(OZ_1X)_3 + P\,(OZ_2X)_3 + P\,(OZ_3X)_3$$

dans lequel $Z_1$, $Z_2$ et $Z_3$ sont strictement différents, soit par exemple, un mélange en toutes proportions du phosphite de tris (chloro-éthyle), du phosphite de tris (chloropropyle) et/ou du phosphite de tris (dichloropropyle).

Lors de l'isomérisation thermique des phosphites halogénés par la transposition d'ARBUZOV, il se produit simultanément des réactions secondaires de type intermoléculaires (réactions de MICHAELIS-ARBUZOV) conduisant à la formation d'halogénoalkanes (éliminés par étêtage sous vide) et de phosphonates oligomères de structure générale présumée:

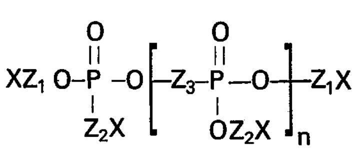

et/ou 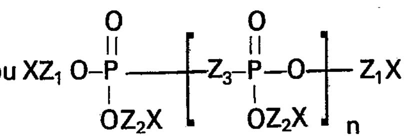

avec X, $Z_1$, $Z_2$, $Z_3$ comme précédemment

et n = entier ⩾ 1

L'ensemble de ces phosphonates oligomères (di, tri, tétra...), éventuellement présents comme constituants secondaires des mélanges de l'invention (c'est-à-dire en proportion inférieure à environ 45% en poids), sera désigné par le terme général de «polyphosphonates».

L'invention fournit donc des mélanges ignifugeants contenant du phosphore, à bas point de cristallisation, caractérisés en ce qu'ils sont constitués principalement de plusieurs phosphonates de structure:

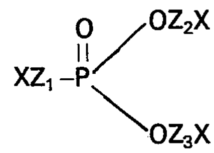

dans laquelle: X = chlore ou brome

$Z_1, Z_2, Z_3 = -CH_2-CH_2-$

ou 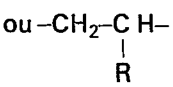

avec R = $CH_3$ ou $CH_2Cl$

et tels que le rapport molaire des groupements $-CH_2-CH_2-X$ à la somme des groupements $-CH_2-CH_2-X + -CH_2-CHR-X$ prenne toute valeur de 2 à 90%.

L'invention fournit également des mélanges ignifugeants selon la revendication 1, caractérisés en ce qu'ils contiennent également jusqu'à environ 45% en poids de polyphosphonates à hauts points d'ébullition, correspondant principalement aux structures:

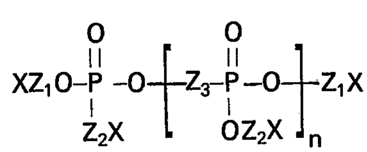

et ou 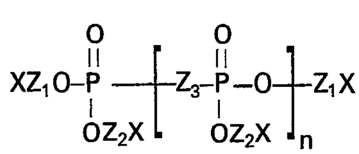

dans lesquelles: X, $Z_1$, $Z_2$, et $Z_3$ sont définis comme précédemment, n est un nombre entier ⩾ 1.

L'examen analytique des mélanges de l'invention, par chromatographie d'exclusion stérique, permet de déterminer le pourcentage global (en poids) de polyphosphonates formés.

Les mélanges ignifugeants de l'invention sont utiles pour améliorer le comportement au feu des matériaux de synthèse, en particulier des matériaux à base de polyuréthannes (mousses souples, mousses rigides, élastomères. . .).

Les mélanges ignifugeants de l'invention peuvent également être utilisés efficacement pour améliorer le comportement au feu des matériaux de synthèse tels que les résines de polyesters insaturés, les résines époxydes, les compositions à base de PVC, les compositions pour peintures et vernis, les textiles naturels ou synthétiques, les matériaux cellulosiques et les compositions à base de caoutchoucs.

Les mélanges ignifugeants de l'invention peuvent être incorporés aux matériaux à ignifuger par toute technique appropriée. Dans les matériaux à base de polyuréthannes, les produits de l'invention peuvent être facilement mélangés aux composants liquides du système (polyol, prépolymère, isocyanate, catalyseur), préalablement à la réaction de formation du polyuréthanne. Ils peuvent, également, sur certaines machines de mise en œuvre, être amenés directement dans la zone réaction (tête de mélange) à l'aide d'une ligne d'alimentation spécifique.

L'incorporation aux produits solides peut s'effectuer par les techniques classiques de mélangeage. Enfin, dans certains cas, il peut être avantageux de préparer une émulsion préalable des mélanges de l'invention, en milieu aqueux par exemple.

De faibles quantités des mélanges de l'invention permettent de constater une amélioration du comportement au feu des matériaux. Néanmoins, la quantité efficace utilisée est au moins égale à 1% en poids par rapport au matériau.

D'autre part, des teneurs supérieures à 20% en poids ne sont généralement pas nécessaires, mais peuvent cependant être utilisées.

Il est également compris dans le domaine de l'invention d'utiliser simultanément, dans les matériaux ignifugés au moyen des nouveaux mélanges décrits, d'autres additifs destinés à modifier ou améliorer les propriétés du matériau. Ces additifs peuvent comprendre des agents de renforcement des propriétés mécaniques, des antioxydants, des plastifiants, des colorants, des pigments, des stabilisants thermiques, des stabilisants à la lumière et aux rayonnements ultra-violets, des agents porogènes, des additifs «anti-retrait», des produits de conservation, des catalyseurs, des produits employés en tant que charges ou d'autres agents d'amélioration de la réaction au feu ou de synergie tels que le trioxyde d'antimoine.

La réaction au feu des matériaux ignifugés entrant dans le domaine de l'invention peut être mesurée à l'aide de la méthode consistant à déterminer «l'indice d'oxygène». L'indice d'oxygène (I.O.) est défini comme étant la valeur minimale de la concentration volumique d'oxygène, contenue dans un mélange d'azote et d'oxygène, qui permet d'entretenir la combustion d'une éprouvette de matière. Cette méthode d'essai est décrite en détail dans la norme française NFT 51071 et dans la norme des Etats-Unis ASTM D-2863-76.

Ce test de laboratoire est utilisé pour évaluer comparativement, dans des conditions conventionnelles d'essai, la réaction au feu des matières sous forme de barreaux. Pour les matériaux alvéolaires, la section des barreaux est de 12,5×12,5 mm. L'efficacité ignifuge d'un additif sera d'autant plus grande, dans les conditions d'appréciation du laboratoire, qu'on observera un accroissement plus important de la valeur de l'I.O.

Une autre méthode conventionnelle d'essai est également utilisée pour apprécier le comportement au feu des matériaux cellulaires. Il s'agit de la méthode décrite dans la norme des Etats-Unis ASTM D-1692-68 «Flammability of plastic sheeting and cellular plastics».

Cette norme prévoit d'exposer à la flamme d'un brûleur à gaz l'extrémité d'une éprouvette horizontale (dimension 150×50×13 mm) supportée par une toile métallique, pendant une durée de 30 secondes. L'essai consiste à mesurer la longueur détruite par la combustion (au maximum jusqu'à un trait repère tracé à 127 mm de l'extrémité exposée à la flamme) et la durée de la propagation. Les résultats sont la moyenne calculée sur 5 éprouvettes. Si, pour chaque éprouvette examinée, la longueur détruite est inférieure à 127 mm, le matériau est classé «self-extinguishing» (SE) dans les conditions de l'essai. Dans le cas contraire (destruction totale), il est classé «burning» (B).

Il faut cependant rappeler que les essais conventionnels de laboratoire ne peuvent donner qu'une information relative sur la réaction au feu des matériaux, ces essais ne prenant pas en compte certains paramètres intervenant dans les incendies réels.

Les exemples qui suivent illustrent l'invention.

Exemple 1

Dans un autoclave en acier inoxydable de 6 litres, on introduit sous azote 1 234 grammes (8,99 moles) de trichlorure de phosphore $PCl_3$ destillé et 0,17 g de triisopropylate d'aluminium.

On ajoute ensuite progressivement, sous agitation et à température ambiante, 320 g (5,51 moles) d'oxyde de propylène.

Après environ 30 minutes (fin de l'exothermie de réaction), on introduit en 3 heures 1 105 g (25,1 moles) d'oxyde d'éthylène, soit un léger excès par rapport à la stoechiométrie. L'agitation est poursuivie ensuite pendant 3 heures. On chauffe alors le réacteur entre 40 et 45 °C en le maintenant sous pression réduite (10 torrs) pendant une heure.

Après filtration sur laine de silice, on recueille 2 376 g d'un liquide incolore (indice de réfraction à 20 °C = 1,481).

L'examen des spectres de RMN du produit obtenu (1H, 13C) montre qu'il s'agit d'un mélange

de phosphites contenant des groupements chloroéthyles et chloropropyles.

Dans un réacteur en verre de 250 ml, on procède à l'isométrisation thermique à 180 °C de 303 g du mélange de phosphites obtenu dans la réaction précédente, introduits en deux étapes:

– initialement 125 g chauffés progressivement à 180 °C en contrôlant rigoureusement la température,

– puis, après un délai de 1 heure 30 mn, 178 g introduits en 1 heure 20 mn.

Le milieu réactionnel est maintenu à 180 °C pendant encore 2 h 30 mn. Un échantillon du milieu réactionnel montre alors une teneur en phosphites résiduels de 0,17% en poids (dosage selon la méthode classique à l'iode en présence de méthanol).

Après étêtage sous pression réduite (3 torrs, 100 à 120 °C pendant 45 minutes) on recueille 276 g d'un liquide incolore.

Ce produit (66 g) est utilisé comme «pied de cuve» pour une deuxième réaction d'isomérisation thermique. On y ajoute progressivement à la température de 195–200 °C, 210 g du mélange de phosphites obtenu précédemment (durée: 1 h 15 mn).

La température est maintenue pendant 2 heures, temps au bout duquel un dosage des phosphites résiduels indique une teneur inférieure à 0,02% dans le milieu.

Après étêtage sous pression réduite (3 torrs, 100 à 120 °C pendant 45 mn), et filtration sur filtre GAUTHIER, on recueille 253 g d'un liquide très peu coloré. L'opération d'étêtage permet de séparer 14 g d'un mélange de produits volatils, constitué de dichloro-1,2 éthane et de dichloro-1,2 propane.

L'examen analytique par RMN (1H et 13C) du produit obtenu montre qu'il s'agit d'un mélange de phosphonates contenant environ 76% en moles de groupements chloroéthyles et environ 24% en moles de groupements chloropropyles. Ce mélange contient 11,4% en poids de phosphore et 35,4% en poids de chlore.

Le produit ne présente pas de cristallisation lorsqu'on abaisse la température jusqu'à −30 °C. Son point d'écoulement, mesuré selon la norme NFT 60105 est de −39 °C.

L'examen par chromatographie d'exclusion stérique indique que le mélange obtenu contient environ 27% en poids de polyphosphonates de hauts poids moléculaires.

Exemple 2

On procède dans les conditions de l'exemple 1 à l'addition successive, à 1 543 g (11,24 moles) de $PCl_3$ distillé contenant 0,19 g de triisopropylate d'aluminium, de 980 g (16,87 moles) d'oxyde de propylène, puis de 820 g (18,61 moles) d'oxyde d'éthylène. On recueille 3 205 g d'un mélange de phosphites contenant des groupements chloroéthyles et chloropropyles.

Une fraction du mélange ainsi obtenu (283 g) est isomérisés «en masse» à 180–185 °C comme dans l'exemple 1, puis une autre fraction est isomérisée en «pied de cuve» à 180–185 °C (214 g de mélange de phosphites introduits dans 75 g du produit isomérisé en masse).

Lorsque la réaction est arrêtée, de dosage des phosphites indique une teneur inférieure à 0,02% dans le milieu. Après étêtage sous vide, on recueille 267 g d'un liquide incolore.

D'après l'analyse par RMN (1H et 13C) il s'agit d'un mélange de phosphonates contenant environ 49% en moles de groupements chloroéthyles et environ 51% en moles de groupements chloropropyles. Ce mélange contient 10,5% en poids de phosphore et 34,5% en poids de chlore.

Le produit ne cristallise pas lorsqu'on abaisse la température jusqu'à −30 °C, son point d'écoulement est de −33 °C.

L'examen par chromatographie d'exclusion stérique indique que le mélange obtenu contient environ 24% en poids de polyphosphonates de hauts poids moléculaires.

Exemple 3

On procède dans les conditions de l'exemple 1 à l'addition successive, à 1 467 g (10,68 moles) de $PCl_3$ distillé contenant 0,19 g de triisopropylate d'aluminium, de 188 g (3,24 moles) d'oxyde de propylène, puis de 1 390 g (31,55 moles) d'oxyde d'éthylène. On recueille 2 932 g d'un mélange de phosphites contenant des groupements chloroéthyles et chloropropyles.

Une fraction du mélange ainsi obtenu (381 g) est isomérisée «en masse» à 180–185 °C comme dans l'exemple 1, puis une autre fraction est isomérisée en «pied de cuve» à 180–185 °C (232 g de mélange de phosphites introduits dans 75 g du produit isomérisé en masse).

Lorsque la réaction est arrêtée, le dosage des phosphites indique une teneur de 0,05% dans le milieu.

Après étêtage sous vide, on recueille 288 g d'un liquide incolore.

D'après l'analyse par RMN (1H et 13C) il s'agit d'un mélange de phosphonates contenant environ 90% en moles de groupements chloroéthyles et environ 10% en moles de groupements chloropropyles. Ce mélange contient 11,8% en poids de phosphore et 37,2% en poids de chlore. Le produit présente un point de cristallisation de 12 °C, son point d'écoulement est de 14 °C.

L'examen par chromatographie d'exclusion stérique indique que le mélange obtenu contient environ 27% en poids de polyphosphonates de hauts poids moléculaires.

Exemple 4

On procède dans les conditions de l'exemple 1 à l'addition successive de 1 533 g (11,16 moles) de $PCl_3$ distillé contenant 0,30 g de triisopropylate d'aluminium, de 1 297 g (22,33 moles) d'oxyde d'éthylène. On recueille environ 3 250 g d'un mélange de phosphites contenant des groupements chloroéthyles et chloropropyles.

Une fraction du mélange ainsi obtenu (73 g) est isomérisée «en masse» à 180–185 °C comme dans l'exemple 1, puis une autre fraction est ensuite isomérisée en «pied de cuve» à 180–185 °C (180 g de mélange de phosphites introduits dans 70 g environ du produit isomérisé en masse).

Lorsque la réaction est arrêtée, le dosage des phosphites indique une teneur inférieure à 0,02% dans le milieu. Après étêtage sous vide, on recueille 221 g de liquide incolore.

D'après l'analyse par RMN (H et 13C), il s'agit d'un mélange de phosphonates contenant environ 33% en moles de groupements chloroéthyles et environ 67% en moles de groupements chloropropyles. Ce mélange contient 9,9% en poids de phosphore et 33,4% en poids de chlore. Le produit ne présente pas de cristallisation lorsqu'on abaisse la température jusqu'à −30 °C, son point d'écoulement est de −36 °C. L'examen par chromatographie d'exclusion stérique indique que le mélange obtenu contient environ 24% en poids de polyphosphonates de hauts poids moléculaires.

Exemple 5

On procède dans les conditions de l'exemple 1 à l'addition successive, à 1 163,5 g (8,47 moles) de $PCl_3$ distillé contenant 0,25 g d'isopropylate d'aluminium, de 470 g (5,08 moles) d'épichlorhydrine, puis de 995 g (22,59 moles) d'oxyde d'éthylène. On recueille environ 2 505 g d'un mélange de phosphites contenant des groupements chloroéthyles et dichloropropyles.

Une fraction du mélange ainsi obtenu (71 g) est isomérisée «en masse» à environ 180 °C, comme dans l'exemple 1, puis une autre fraction est isomérisée en «pied de cuve» à 180–185 °C (176 g de mélange de phosphites introduits dans 70 g environ du produit isomérisé en masse).

Lorsque la réaction est arrêtée, le dosage des phosphites indique une teneur inférieure à 0,03% dans le milieu. Après étêtage sous vide, on recueille 226 g d'un liquide incolore.

D'après l'analyse par RMN (1H et 13C), il s'agit d'un mélange de phosphonates contenant environ 81% en moles de groupements chloroéthyles et environ 19% en moles de groupements dichloropropyles.

Ce mélange contient 10,9% en poids de phosphore et 38,4% en poids de chlore. Le produit ne cristallise pas lorsqu'on abaisse la température jusqu'à −30 °C, son point d'écoulement est de −30 °C.

L'examen par chromatographie d'exclusion stérique indique que le mélange obtenu contient environ 28% en poids de polyphosphonates de hauts poids moléculaires.

Exemple 6

Dans un réacteur de 80 litres, en acier inoxydable soigneusement séché, on introduit 25,5 kilogrammes de $PCl_3$ et 3,5 g d'isopropylate d'aluminium. Après 15 mn d'agitation, on ajoute 6,6 kg d'oxyde de propylène en 1 heure 15 minutes, puis 22,8 kg d'oxyde d'éthylène en 4 heures 20 minutes, en maintenant la température entre 40 et 45 °C. Le mélange est encore agité pendant 30 mn et après mise sous pression réduite (15 à 20 torrs pendant 30 mn à 40 °C), on recueille dans le réacteur 54 kg d'un mélange de phosphites contenant des groupements chloroéthyles et chloropropyles.

Dans un réacteur de 12 litres en acier inoxydable muni d'un agitateur, on introduit 2 kg d'un mélange de phosphonates de chloroéthyle et de chloropropyle préparé dans les conditions de l'exemple 1, et on chauffe le réacteur à 165 °C à l'aide de vapeur d'eau surchauffée. On introduit 10 kg du mélange de phosphites obtenu dans la phase précédente en 11 h 30 mn,en maintenant dans le réacteur la température à 165 °C et la pression entre 0,3 à 0,5 bar.

On chauffe ensuite le réacteur pendant 2 heures supplémentaires à 165 °C. A ce stade, 888 g de dichloro-1,2 éthane et 38 g de dichloro-1,2 propane ont été produits.

Un échantillon du milieu réactionnel montre alors une teneur en phosphites résiduels de 0,14% en poids. Le mélange réactionnel est chauffé sous 100 torrs jusqu'à atteindre la température de 180 °C. Après refoidissement, le dosage des phosphites n'indique plus qu'une teneur de 0,05% dans le milieu.

L'examen analytique par RMN (1H et 13C) montre qu'il s'agit d'un mélange contenant environ 79% en moles de groupements chloroéthyles et environ 21% en moles de groupements chloropropyles. Ce mélange contient 12,5% en poids de phosphore et 33% en poids de chlore.

Le produit ne présente pas de cristallisation lorsqu'on abaisse la température jusqu'à −30 °C, son point d'écoulement est de −39 °C.

L'examen par chromatographie d'exclusion stérique montre que le mélange obtenu contient environ 38,5% en poids de polyphosphonates de hauts poids moléculaires.

Exemple 7

On prépare des blocs de mousses souples de polyuréthannes par la mise en œuvre de la formulation du tableau I:

Tableau I

| Constituant | Parties en poids |
|---|---|
| Polyéther triol UGIPOL U 1120[a] | 100 |
| Eau | 3,5 |
| Catalyseur aminé (N,N-diméthyle éthanolamine[a]) | 0,30 |
| Catalyseur métallique à base d'octoate stanneux | 0,25 |
| Silicone[b] | 0,80 |
| Additif ignifugeant | 10 |
| Toluène diisocyanate LILENE T 80[a] Mélange 80/20 des isomères 2,4 et 2,6 (indice 106) | 43 |

a) PRODUITS CHIMIQUES UGINE KUHLMANN, PCUK
b) GOLDSCHMIDT BF 2370

La masse volumique des blocs obtenus en expansion libre (dimensions 0,2×0,2×0,2 m) est de l'ordre de 30 kg/m$^3$.

Les essais de réaction au feu sont effectués avant et après vieillissement accéléré des éprouvettes, dans les conditions suivantes:

– Enceinte climatique à 90 °C et 90% d'humidité relative,

– Durée: 5 ou 24 heures.

Le mélange de phosphonates de l'exemple 1 est incorporé comme additif ignifugeant dans une composition de mousse souple. Deux autres compositions sont également préparées à titre comparatif en remplaçant le mélange de l'invention par du phosphate de tris (chloro-2 éthyle) (TCEP), ou par de l'ANTIBLAZE 78 de MOBIL CHEMICAL. L'ensemble des résultats obtenus est donné dans le tableau II.

Les résultats obtenus après vieillissement accéléré mettent particulièrement en évidence les avantages des produits de l'invention, au niveau de la permanence de l'effet ignifugeant.

Exemple 8

On prépare des blocs de mousses souples de polyuréthannes, par la mise en œuvre de la formulation du tableau III (type «haute résilience»).

Tableau III

| Constituant | Parties en poids |
|---|---|
| Polyéther triol UGIPOL U 1340[a] | 100 |
| Eau | 2,8 |
| Catalyseur aminé (DABCO 33 LV[b] + diméthylaminopropylamine[a]) | 0,7 |
| Glycérine | 2,0 |
| Triéthanolamine[a] | 2,0 |
| Silicone[c] | 0,5 |
| Agent d'expansion FORANE 11[a] | 3,0 |
| Additif ignifugeant | 3,5 |
| Mélange d'isocyanates 60% MDI brut, 40% TDI pur (indice 105) | 48,4 |

a) PRODUITS CHIMIQUES UGINE KUHLMANN, PCUK
b) HOUDRY
c) GOLDSCHMIDT 4113

La masse volumique des blocs par moulage (dimension 0,3×0,3×0,1 m) est de l'ordre de 40 kg/m$^3$.

Tableau II

| Additif ignifugeant | Sans vieillissement indice d'oxygène (%) | ASTM D-1692-68 t⁺ (s) | 1⁺ (mm) | Class | Vieillissement de 5H indice d'oxygène (%) | ASTM D-1692-68 t⁺ (s) | 1⁺ (mm) | Class | Vieillissement de 24H indice d'oxygène (%) | ASTM D-1692-68 t⁺ (s) | 1⁺ (mm) | Class |
|---|---|---|---|---|---|---|---|---|---|---|---|---|
| Sans (témoin) | 17,3 | 69 | 127 | B | 17,4 | 85 | 127 | B | 18,1 | 81 | 127 | B |
| Mélange de phosphonates de l'exemple 1 | 23,6 | 32 | 32 | SE | 23,1 | 36 | 39 | SE | 23,0 | 58 | 66 | SE |
| TCEP | 21,6 | 53 | 55 | SE | 21,0 | 117 | 127 | B | 21,0 | 78 | 127 | B |
| ANTIBLAZE 78 | 23,2 | 35 | 38 | SE | 22,6 | 47 | 57 | SE | 22,2 | 76 | 127 | B |

⁺t = temps de combustion
1 = longueur détruite par la combustion (destruction totale = 127 mm)

Les mesures d'indice d'oxygène sont effectuées avant et après vieillissement accéléré des éprouvettes, dans les conditions suivantes:
- étuve ventilée à 140 °C
- durée: 22 heures

Le mélange de phosphonates de l'exemple 1 est incorporé comme additif ignifugeant dans une composition de mousse. Trois autres compositions sont également préparées à titre comparatif en remplaçant le mélange de l'invention par du TCEP, par de l'ANTIBLAZE 78 de MOBIL CHEMICAL, ou par du THERMOLIN 101 de OLIN Corp. (Tétrakis (chloro-2 éthyle) éthylène diphosphate).

Les résultats obtenus sont donnés dans le tableau IV.

Tableau IV

| Additif ignifugeant | Sans vieillissement indice d'oxygène (%) | Après vieillissement indice d'oxygène (%) |
|---|---|---|
| Sans (témoin) | 22,3 | 22,0 |
| Mélange de phosphonates de l'exemple 1 | 25,4 | 23,7 |
| TCEP | 23,8 | 23,3 |
| ANTIBLAZE 78 | 25,4 | 23,0 |
| THERMOLIN 101 | 24,5 | 21,2 |

Exemple 9

On prépare des blocs de mousses souples de polyuréthannes par mise en œuvre de la formulation du tableau V.

Tableau V

| Constituant | Parties en poids |
|---|---|
| Polyether polyol UGIPOL U 1120[a] | 100 |
| Eau | 3,5 |
| Catalyseur aminé (DABCO 33 LV[b]) | 0,15 |
| Catalyseur métallique à base d'octoate stanneux | 0,25 |
| Silicone[c] | 0,70 |
| Additif ignifugeant | variable (10 ou 20) |
| Toluène diisocyanate LILENE T80[a] mélange 80/20 des isomères 2,4 et 2,6 (indice 105) | 42 |

a) PRODUITS CHIMIQUES UGINE KUHLMANN
b) HOUDRY
c) UNION CARBIDE L 540

La masse des blocs obtenus en expansion libre (dimensions 0,2×0,2×0,2 m) est de l'ordre de 32 kg/m³.

Les essais de réaction au feu sont effectués avant et après vieillissement accéléré des éprouvettes, dans les conditions de l'exemple 7.

Les mélanges de phosphonates des exemples 2, 3, 4, 5 et 6 sont incorporés comme additifs ignifugeants à différentes teneurs dans des compositions de mousses souples. Deux autres compositions sont également préparées à titre comparatif en remplaçant les mélanges de l'invention par de l'ANTIBLAZE 78 de MOBIL CHEMICAL ou par du chloropropyle phosphonate de bis (chloropropyle), préparé au laboratoire par condensation d'oxyde de propylène sur $PCl_3$ et isomérisation thermique du phosphite obtenu. L'ensemble des résultats obtenus est donné dans le tableau VI.

Tableau VI

| Additif ignifugeant | Teneur (parties pour 100 de polyol) | Sans vieillissement indice d'oxygène (%) | Avec vieillissement 5 heures indice d'oxygène (%) | Avec vieillissement 24 heures indice d'oxygène (%) |
|---|---|---|---|---|
| Sans (témoin) | – | 16,8 | 17,5 | 18,5 |
| Mélange de phosphonates de l'exemple 2 | 10 | 22,3 | 22,3 | 21,9 |
| Mélange de phosphonates de l'exemple 3 | 10 | 22,0 | 22,0 | 21,6 |
| Mélange de phosphonates de l'exemple 4 | 10 | 22,5 | 22,1 | 21,7 |
| Mélange de phosphonates de l'exemple 5 | 10 | 22,1 | 22,7 | 23,0 |
| ANTIBLAZE 78 | 10 | 21,9 | 21,9 | 21,4 |
| Chlorpropyle phosphonate de bis (chloropropyle) | 10 | 21,9 | 21,7 | 21,2 |
| Mélange de phosphonates de l'exemple 6 | 20 | 23,3 | 23,0 | 22,6 |

Exemple 10

On prépare sur une machine ADMIRAL, type basse pression (3 composants), des blocs de mousses souples de polyuréthannes de dimensions: 2,0×0,7×0,6 m.

La formulation mise en œuvre est donnée dans le tableau VII.

Tableau VII

| Constituant | parties en poids |
|---|---|
| Polyéther triol UGIPOL U 1120[a)] | 100 |
| Eau | 4,0 |
| Catalyseur aminé (N,N-diméthyle éthanolamine[a)] | 0,4 |
| Catalyseur métallique à base d'octoate stanneux | 0,20 |
| Silicone[b)] | 0,80 |
| Additif ignifugeant | 10 |
| Toluène diisocyanate LILENE T 80[a)] (indice 106) | 48,1 |

a) PRODUITS CHINIQUES UGINE KUHLMANN, PCUK
b) GOLDSCHMIDT BF 3640

La masse volumique des blocs obtenus est de l'ordre de 27 kg/$m^3$.

Les essais de réaction au feu sont effectués avant et après vieillissement accéléré des éprouvettes dans les conditions suivantes:

– enceinte climatique à 90 °C et 90% d'humidité relative pendant 24 heures.

– puis étuve à 60 °C pendant 24 heures.

Le mélange de phosphonates obtenu dans l'exemple 6 est incorporé comme additif ignifugeant dans une composition de mousse. Trois autres compositions sont également préparées à titre comparatif en remplaçant le mélange de l'invention par du TCEP, du THERMOLIN 101 de OLIN ou du PHOSGARD 2×C20 de MONSANTO.

L'ensemble des résultats de mesures de propriétés physiques et de réaction au feu est donné dans le tableau VIII.

Tableau VIII

| Additif ignifugeant | Sans (témoin) | Mélange de phosphonates de l'exemple 6 | TCEP | Thermolin 101 | Phosgard 2×C20 |
|---|---|---|---|---|---|
| Mise en œuvre | | | | | |
| Temps de montée (s) | 90 | 90 | 85 | 90 | 120 |
| Résistance à la compression selon NFT 56111 (dimensions: 40×45×10 cm) | | | | | |
| ILD (N) 25% | 1,7 | 1,5 | 1,8 | 1,7 | 1,2 |
| 40% | 2,5 | 1,9 | 2,4 | 2,2 | 1,5 |
| 60% | 3,6 | 3,3 | 4,1 | 2,7 | 2,9 |
| Résistance à la traction selon NFT 56108 | | | | | |
| Allongement (%) | 247 | 276 | 179 | 203 | 170 |
| Rupture (KPa) | 128 | 132 | 109 | 120 | 109 |
| Résistance au déchirement selon NFT 56109 (N/m) | 588 | 520 | 443 | 445 | 495 |
| Indice d'oxygène (%) | | | | | |
| Avant vieillissement | 17,8 | 24,1 | 22,5 | 23,2 | 22,5 |
| après vieillissement | 18,5 | 23,0 | 19,9 | 22,9 | 22,7 |
| Combustibilité horizontale selon ASTM D 1692-68 | | | | | |
| Avant vieillissement | | | | | |
| – Temps de combustion (s) | 60 | 35 | 84 | 39 | 40 |
| – Longueur détruite (mm) | 127 | 40 | 120 | 47 | 49 |
| – Classement | B | SE | SE | SE | SE |
| Après vieillissement | | | | | |
| – Temps de combustion (s) | 69 | 54 | 73 | 60 | 62 |
| – Longueur détruite (mm) | 127 | 60 | 127 | 71 | 78 |
| – Classement | B | SE | B | SE | SE |

Ces résultats mettent en évidence l'intérêt des mélanges de l'invention pour obtenir des matériaux à comportement au feu amélioré, moyennant une influence limitée sur les propriétés physiques et mécaniques.

**Revendications**

1. Mélanges ignifugeants contenant du phosphore, à point de cristallisation ne dépassant pas 13 °C, constitués principalement de plusieurs phosphonates de structure:

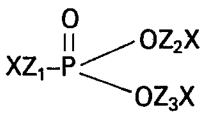

dans lesquels: X = chlore ou brome

$Z_1, Z_2, Z_3 = -CH_2-CH_2-$

ou 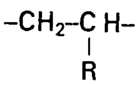

avec R = $CH_3$ ou $CH_2Cl$

caractérisés par le fait que le rapport molaire des groupements $-CH_2-CH_2-X$ à la somme des groupements $-CH_2-CH_2-X$ + $-CH_2-CHR-X$ prenne toute valeur de 2 à 90%.

2. Mélanges ignifugeants selon la revendication 1, caractérisés en ce qu'ils contiennent également jusqu'à environ 45% en poids de polyphosphonates à hauts points d'ébullition, correspondant principalement aux structures:

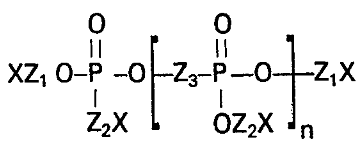

et/ou

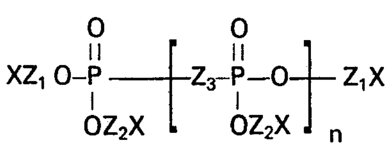

dans lesquelles: X, $Z_1$, $Z_2$, $Z_3$ sont définis comme précédemment, n est un nombre entier $\geqslant 1$.

3. Compositions de matériaux de synthèse contenant entre 1 et 20% en poids des mélanges de la revendication 1.

4. Compositions de matériaux selon la revendication 3, telles que le matériau soit à base de polyuréthannes.

5. Compositions de matériaux de synthèse contenant entre 1 et 20% en poids des mélanges de la revendication 2.

6. Compositions de matériaux selon la revendication 5, telles que le matériau soit à base de polyuréthannes.

**Patentansprüche**

1. Phosphorhaltige Flammschutzmittelgemische mit einem Kristallisationspunkt unter 13 °C, die im wesentlichen aus mehreren Phosphonaten der Struktur

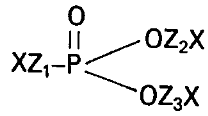

bestehen, in der X Chlor oder Brom,

$Z_1$, $Z_2$ und $Z_3$ = $-CH_2-CH_2-$ oder 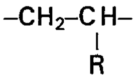

und R = $CH_3$ oder $CH_2Cl$

ist, dadurch gekennzeichnet, dass das Molverhältnis der Gruppen $-CH_2-CH_2-X$ zur Summe der Gruppen $-CH_2-CH_2-X$ + $-CH_2-CHR-X$ zwischen 2 und 90% liegt.

2. Flammschutzmittelmischungen nach Anspruch 1, dadurch gekennzeichnet, dass sie ebenfalls bis zu etwa 45 Gewichtsprozent Polyphosphonate mit hohen Siedepunkten enthalten, die im wesentlichen den Strukturen

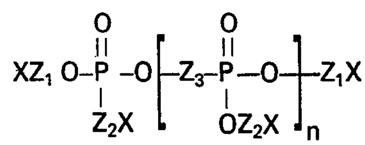

und/oder

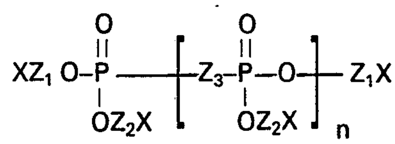

entsprechen, in denen X, $Z_1$, $Z_2$ und $Z_3$ die vorgenannten Bedeutungen besitzen und n eine ganze Zahl $\geqslant 1$ ist.

3. Synthesematerial-Zusammensetzungen, die zwischen 1 und 20 Gewichtsprozent der Mischungen gemäss Anspruch 1 enthalten.

4. Material-Zusammensetzungen nach Anspruch 3, bei denen das Material eine Polyurethanbasis besitzt.

5. Synthesematerial-Zusammensetzungen, die zwischen 1 und 20 Gewichtsprozent der Gemische gemäss Anspruch 2 enthalten.

6. Material-Zusammensetzungen nach Anspruch 5, bei denen das Material eine Polyurethan-Basis besitzt.

**Claims**

1. Phosphorus-containing flame-retardant mixtures with a crystallization point which does

not exceed 13 °C, which consists chiefly of several phosphonates of structure:

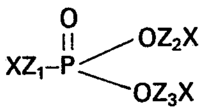

in which: X = chlorine or bromine

$Z_1, Z_2, Z_3 = -CH_2-CH_2-$ or 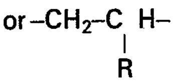

with $R=CH_3$ or $CH_2Cl$

which are characterized in that the molar ratio of the $-CH_2-CH_2-X$ groups to the total of the groups $-CH_2-CH_2-X$ + $-CH_2-CHR-X$ takes any value from 2 to 90%.

2. Flame-retardant mixtures according to Claim 1, characterized in that they also contain up to approximately 45% by weight of polyphosphonates with high boiling points, corresponding chiefly to the structures:

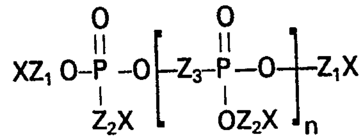

and/or

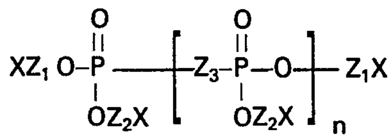

in which: X, $Z_1$, $Z_2$, $Z_3$ are defined as above, and n is an integer $\geqslant 1$.

3. Synthetic material compositions containing between 1 and 20% by weight of the mixtures of Claim 1.

4. Material compositions according to Claim 3, such that the material is based on polyurethanes.

5. Synthetic material compositions containing between 1 and 20% by weight of the mixtures of Claim 2.

6. Material compositions according to Claim 5, such that the material is based on polyurethanes.